# EUROPÄISCHE PATENTSCHRIFT

(11) **EP 2 325 985 B1**
(45) Veröffentlichungstag und Bekanntmachung des Hinweises auf die Patenterteilung: **03.01.2018**
(21) Anmeldenummer: 10014680.2
(22) Anmeldetag: 17.11.2010
(51) Int. Cl.: H02M 3/07, H02M 3/155, H02M 7/538, G05F 1/56, H02M 1/00

(54) **Schaltungsanordnung und Verfahren zum Bereitstellen einer Spannungsversorgung für eine Treiberschaltung**
Circuit assembly and method for preparing a voltage supply for a driver stage
Circuit et procédé de préparation d'une alimentation de tension pour un étage de commande

(30) Priorität: 20.11.2009 DE 102009053909; 29.05.2010 DE 102010022001
(43) Veröffentlichungstag der Anmeldung: 25.05.2011
(73) Patentinhaber: Diehl AKO Stiftung & Co. KG, 88239 Wangen im Allgäu (DE)
(72) Erfinder: Weinmann, Martin, 88339 Bad Waldsee (DE); Rieser, Martin, 88239 Wangen (DE); Schütz, Artur, 88239 Wangen (DE)
(74) Vertreter: Diehl Patentabteilung

(56) Entgegenhaltungen:
- US-A1- 2004 212 332

## Beschreibung

Die vorliegende Erfindung betrifft eine Schaltungsanordnung zum Bereitstellen einer Spannungsversorgung für eine von einer Steuerung angesteuerte Treiberschaltung sowie ein Verfahren zum Bereitstellen einer Spannungsversorgung für eine von einer Steuerung angesteuerte Treiberschaltung.
Halbleiterschalter, insbesondere Leistungstransistoren zum Schalten hoher Ströme und Spannungen, wie sie beispielsweise in einer Leistungshalbleiterbrücke zum Antreiben eines Motors eingesetzt werden, benötigen häufig spezielle Treiberschaltungen zum Erzeugen der Steuersignale, die das Ein- und Ausschalten der Leistungstransistoren kontrollieren. Die Treiberschaltungen werden dabei üblicherweise von einer Steuerung wie beispielsweise einem Mikrocontroller angesteuert.
Allgemein bedarf eine Schaltungsanordnung bzw. Elektronik, die zur Ansteuerung eines Motors benutzt wird, mehrerer unterschiedlicher Versorgungsspannungen, die durch die zu versorgenden Komponenten vorbestimmt werden. Die Anforderungen an diese Versorgungsspannungen bezüglich Genauigkeit, Welligkeit, Belastbarkeit, usw. sind so unterschiedlich wie die erforderlichen Spannungsebenen. So benötigt zum Beispiel ein Mikrocontroller typischerweise eine sehr genaue und belastbare 3,3 V - Versorgungsspannung, während Peripheriekomponenten wie Operationsverstärker, Relais, Treiber und dergleichen eine 5-15 V - Versorgungsspannung mit mittlerer Genauigkeitsanforderung benötigen.

Die Energie zur Erzeugung dieser Versorgungsspannungen wird häufig aus einem Zwischenkreis bezogen. Da jede Spannungsebene Schaltungsaufwand und damit Platzbedarf und Kosten bedeutet, werden herkömmlicherweise meist nur zwei unterschiedliche Spannungen generiert und kontinuierlich bereitgestellt. Es handelt sich dabei typischerweise um 3,3 V für den Mikrocontroller und 15 V für die restlichen Verbraucher.

Dieses Konzept hat jedoch verschiedene Nachteile:
a) Befindet sich die Elektronik im Ruhezustand, werden die meisten Verbraucher, die mit dem Motorbetrieb zusammenhängen, nicht benötigt, belasten aber dennoch weiter die Versorgungsspannung, die aufgrund anderer Verbraucher kontinuierlich bereitgestellt werden muss.
b) Einige Verbraucher, wie z. B. manche Operationsverstärker, haben einen variablen Spannungseingang von typischerweise 5 bis größer 15 V und benötigen spannungsunabhängig einen konstanten Strom. Daher ist es in Bezug auf die Verlustleistung nachteilig, diese mit 15 V zu versorgen.
c) Der Mikrocontroller konfiguriert beim Power-Up seine Ports. In dieser Zeit sind seine Ausgänge, die die Treiberstufe ansteuern, evt. nicht definiert. Ist die Versorgungsspannung für die Treiberschaltung zu diesem Zeitpunkt bereits vorhanden, kann es zu einem unerwünschten Einschalten der Leistungshalbleiter führen.
d) Die größere Hilfsspannung von zum Beispiel 15 V, die aus dem Zwischenkreis erzeugt wird, versorgt die Peripheriekomponenten und dient als Quelle für die niedrigere Hilfsspannung von zum Beispiel 3,3 V für die Steuerung. Diese niedrigere Versorgungsspannung für die Steuerung wird beispielsweise über einen Längsregler aus der größeren Hilfsspannung generiert, was aufgrund der relativ großen Spannungsdifferenz sehr verlustbehaftet ist.
Die DE 101 33 204 A1 beschreibt ein Verfahren zum Erzeugen der Versorgungsspannung für Treiberschaltungen durch Auskoppeln aus dem Leistungsteil.
In der DE 10 2007 061 978 A1 ist eine Schaltungsanordnung zum Bereitstellen einer Spannungsversorgung für mehrere Treiberschaltungen offenbart. Diese herkömmliche Schaltungsanordnung umfasst eine erste Bootstrap-Schaltung mit einem ersten Kondensator, der eine erste Hilfsspannung zugeführt ist, sowie eine erste Ladungspumpe zum Bereitstellen der Spannungsversorgung für die erste Treiberschaltung, eine zweite Bootstrap-Schaltung mit einem zweiten Kondensator, der eine zweite Hilfsspannung zugeführt ist, zum Erzeugen der Eingangsspannung für die erste Ladungspumpe der ersten Bootstrap-Schaltung und eine zweite Ladungspumpe zum Erzeugen der zweiten Hilfsspannung. Während die Eingangsspannung der ersten Treiberschaltung durch die erste Bootstrap-Schaltung bereitgestellt wird, wird die zweite Treiberschaltung direkt durch die erste Hilfsspannung versorgt.

US 2004/212332 A1 offenbart eine weitere Schaltungsanordnung zum Bereitstellen einer Spannungsversorgung für eine Treiberschaltung.

Es ist eine Aufgabe der vorliegenden Erfindung, eine verbesserte Schaltungsanordnung zum Bereitstellen einer Spannungsversorgung für eine Treiberschaltung vorzusehen.
Diese Aufgabe wird gelöst durch eine Schaltungsanordnung mit den Merkmalen des Vorrichtungsanspruchs 1 sowie des hierzu korrespondierenden Verfahrensanspruchs 9. Vorteilhafte Ausgestaltungen und Weiter-bildungen der Erfindung sind in den abhängigen Ansprüchen 2 bis 8 und 10 definiert. Die erfindungsgemäße Schaltungsanordnung zum Bereitstellen einer Spannungsversorgung für eine von einer Steuerung angesteuerte Treiberschaltung umfasst eine Steuerung zum Ansteuern einer Treiberschaltung; eine erste Spannungsregelschaltung zum Erzeugen einer Hilfsspannung aus einer zur Verfügung stehenden Gleichspannung; eine zweite Spannungsregelschaltung zum Erzeugen einer ersten Versorgungsspannung für die Steuerung aus der Hilfsspannung; und eine dritte Spannungsregelschaltung zum Erzeugen einer zweiten Versorgungsspannung für die Treiberschaltung aus der Hilfsspannung, wobei die dritte Spannungsregelschaltung die zweite Versorgungsspannung in Abhängigkeit von einem Steuersignal von der Steuerung erzeugt. Alternativ ist die dritte Spannungsregelschaltung zum Erzeugen einer zweiten Versorgungsspannung für die Treiberschaltung aus der ersten Versorgungsspannung für die Steuerung geeignet, wobei die dritte Spannungsregelschaltung die zweite Versorgungsspannung in Abhängigkeit von einem Steuersignal von der Steuerung erzeugt.

Bei dieser Schaltungsanordnung wird zunächst aus einer zur Verfügung stehenden Gleichspannung mittels einer ersten Spannungsregelschaltung eine Hilfsspannung erzeugt. Das Potential dieser Hilfsspannung kann in Bezug auf die Verlustleistung optimal auf die Peripheriekomponenten, welche meist eine konstante Stromaufnahme aufweisen, ausgelegt werden.

Die Erzeugung der ersten Versorgungsspannung für die Steuerung (z.B. Mikrocontroller) mittels der zweiten Spannungsregelschaltung aus der Hilfsspannung kann mit relativ geringen Verlusten durchgeführt werden, da die Spannungsdifferenz zwischen der Hilfsspannung und dieser ersten Versorgungsspannung relativ klein gewählt werden kann.

Die zweite Versorgungsspannung für die Treiberschaltung wird mittels der dritten Spannungsregelschaltung ebenfalls aus der Hilfsspannung erzeugt.

Da die dritte Spannungsregelschaltung diese zweite Versorgungsspannung für die Treiberschaltung in Abhängigkeit von einem Steuersignal von der Steuerung erzeugt, wird diese zweite Versorgungsspannung insbesondere nur dann generiert, wenn sie von der Treiberschaltung tatsächlich benötigt wird.

Auf diese Weise kann die Verlustleistung der Schaltungsanordnung im Standby im Vergleich zu herkömmlichen Schaltungsanordnungen, bei denen die Versorgungsspannung für die Treiberschaltung kontinuierlich generiert wird, reduziert werden. Außerdem kann eine Fehlansteuerung der von der Treiberschaltung angesteuerten Komponenten zum Beispiel im Standby oder während der Initialisierung der Steuerung vermieden werden.

Die zweite Spannungsregelschaltung weist zum Beispiel einen Längsregler auf.

In einer Ausgestaltung der Erfindung ist die zweite Versorgungsspannung größer oder gleich der Hilfsspannung gewählt. In diesem Fall weist die dritte Spannungsregelschaltung zum Beispiel einen Hochsetzsteller und/oder eine Ladungspumpe auf.

In einer alternativen Ausgestaltung der Erfindung ist die zweite Versorgungsspannung kleiner oder gleich der Hilfsspannung gewählt. In diesem Fall weist die dritte Spannungsregelschaltung zum Beispiel einen Tiefsetzsteller auf.

In einer noch weiteren Ausgestaltung der Erfindung ist die Steuerung derart ausgestaltet, dass sie das Steuersignal für die dritte Spannungsregelschaltung in Abhängigkeit von einer fehlerfreien Funktionalität der Treiberschaltung und/oder einer von der Treiberschaltung angesteuerten Schaltung erzeugt. Auf diese Weise ist es möglich, mit der erfindungsgemäßen Schaltungsanordnung auf einfache Weise und insbesondere ohne zusätzliche Schaltungen bzw. Komponenten eine so genannte Watchdog-Funktion zu realisieren.

Ferner kann die Höhe der zweiten Versorgungsspannung für die Treiberschaltung wahlweise durch die Steuerung selbst oder durch eine zusätzliche Schaltung steuerbar sein.

In einer weiteren Ausgestaltung der Erfindung weist die Schaltungsanordnung weiter eine an eine Spannungsquelle anschließbare Zwischenkreisschaltung zum Bereitstellen der Gleichspannung auf.

Diese Zwischenkreisschaltung kann zum Beispiel eine Gleichrichterschaltung enthalten.

Die oben genannte Aufgabe wird außerdem durch ein Verfahren zum Bereitstellen einer Spannungsversorgung für eine Treiberschaltung mit den Merkmalen des Anspruches 9 gelöst.

Bei dem erfindungsgemäßen Verfahren zum Bereitstellen einer Spannungsversorgung für eine von einer Steuerung angesteuerte Treiberschaltung wird eine Hilfsspannung aus einer zur Verfügung stehenden Gleichspannung erzeugt; wird eine erste Versorgungsspannung für die Steuerung aus der Hilfsspannung erzeugt; und wird eine zweite Versorgungsspannung für die Treiberschaltung aus der Hilfsspannung in Abhängigkeit von einem Steuersignal von der Steuerung erzeugt. Alternativ wird die zweite Versorgungsspannung aus der ersten Versorgungsspannung gespeist.

Vorzugsweise wird zur Durchführung dieses Verfahrens zum Bereitstellen der Spannungsversorgung für die Treiberschaltung die oben beschriebene Schaltungsanordnung der Erfindung verwendet.

Die oben beschriebene Schaltungsanordnung und das vorbeschriebene Verfahren gemäß der vorliegenden Erfindung können in vorteilhafter Weise zum Ansteuern von Motorantrieben eingesetzt werden. Insbesondere sind sie auch für Motorantriebe in elektronischen Haushaltsgeräten wie beispielsweise Waschmaschinen, Wäschetrockner, Spülmaschinen und dergleichen geeignet.

Obige sowie weitere Merkmale, Vorteile und Anwendungsmöglichkeiten der Erfindung werden aus der nachfolgenden Beschreibung bevorzugter, nicht-einschränkender Ausführungsbeispiele anhand der beiliegenden Zeichnungen besser verständlich. Darin zeigen:
- Fig. 1: eine schematische Darstellung des Aufbaus einer Schaltungsanordnung gemäß einem ersten Ausführungsbeispiel der vorliegenden Erfindung;
- Fig. 2: eine schematische Darstellung des Aufbaus einer Schaltungsanordnung gemäß einem zweiten Ausführungsbeispiel der vorliegenden Erfindung; und
- Fig. 3: eine schematische Darstellung der Ansteuerung der Treiberschaltung für die Schaltungsanordnungen der Fig. 1 und 2.

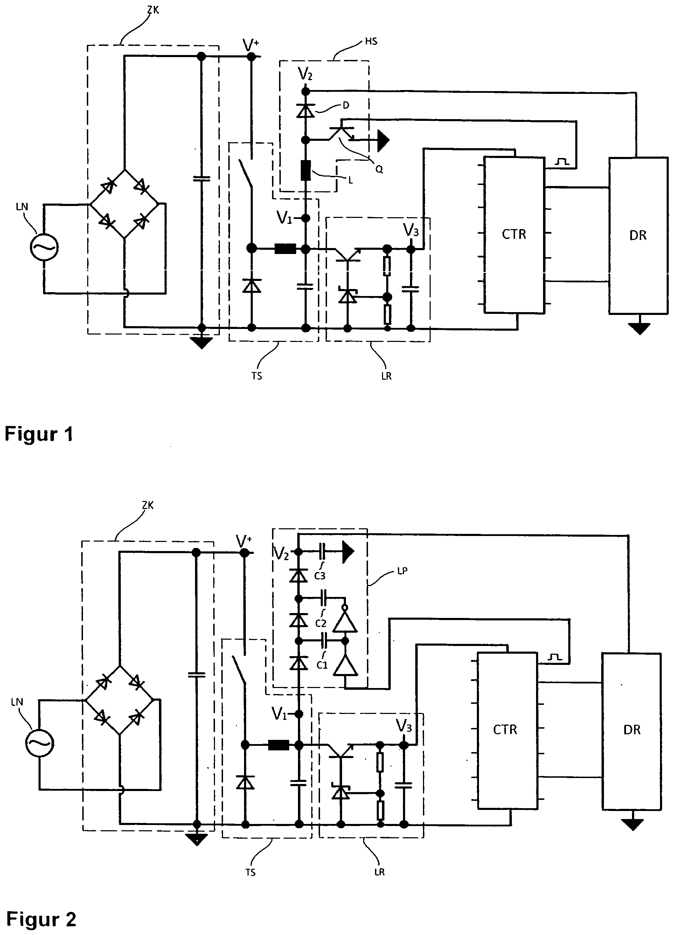

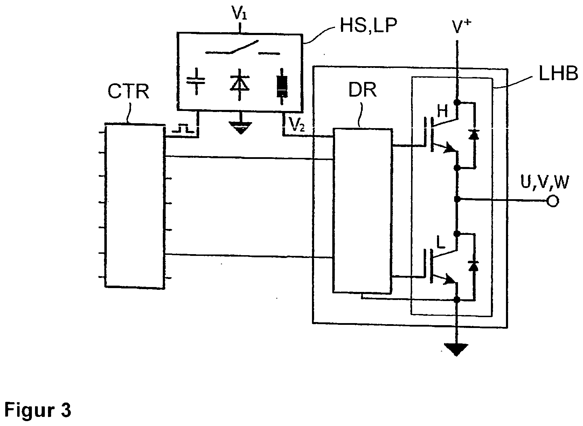

Bezug nehmend auf Fig. 1 und 3 wird nun ein erstes Ausführungsbeispiel einer Schaltungsanordnung zum Bereitstellen einer Versorgungsspannung für eine Treiberschaltung näher erläutert.

Wie in Fig. 3 dargestellt, steuert die Steuerung CTR, zum Beispiel ein Mikrocontroller, eine Treiberschaltung DR an. Diese Treiberschaltung DR wiederum schaltet die Leistungshalbleiterschalter einer Leistungshalbleiterbrücke LHB eines Motors (z.B. Antriebsmotor einer Wäschetrommel einer Waschmaschine oder eines Wäschetrockners).

Während die Motorwicklungen über die Leistungshalbleiterbrücke LHB mit einer Gleichspannung V+ versorgt werden, welche zum Beispiel von einem Zwischenkreis zur Verfügung gestellt wird, wie später erläutert, benötigt die Treiberschaltung DR eine Versorgungsspannung V2 von beispielsweise etwa 15 V. Wie unten anhand von Fig. 1 erläutert, wird diese Versorgungsspannung V2 von einer Spannungsregelschaltung HS oder LP, welche von der Steuerung CTR angesteuert wird, nur bei Bedarf generiert.

Bezug nehmend nun auf Fig. 1 dient als Spannungsquelle für sämtliche Verbraucher die Zwischenkreisspannung V+, welche von einer Zwischenkreisschaltung ZK generiert wird. Die Zwischenkreisschaltung ZK ist an ein Netz LN anschließbar und weist eine Gleichrichterschaltung und einen Zwischenkreiskondensator auf, um die Zwischenkreisspannung V+ durch Gleichrichten der Netzspannung zu erzeugen.

Aus der Zwischenkreisspannung V+ wird dann mittels einer ersten Spannungsregelschaltung in Form eines gängigen Tiefsetzstellers TS eine Hilfsspannung V1 in der Höhe von beispielsweise 5,5 V erzeugt. Diese Hilfsspannung V1 versorgt direkt die verschiedenen Peripheriekomponenten (z.B. Operationsverstärker, Komparatoren, Kommunikation, Treiber, etc.).

Außerdem dient diese Hilfsspannung V1 als Quelle für eine erste Versorgungsspannung V3 für den Mikrocontroller CTR in Höhe von beispielsweise 3,3 V. Diese erste Versorgungsspannung V3 für die Steuerung CTR wird aus der Hilfsspannung V1 mit Hilfe einer zweiten Spannungsregelschaltung in Form eines Längsreglers LR sehr genau generiert.

Die von dem Tiefsetzsteller TS bereitgestellte Hilfsspannung V1 dient außerdem als Quelle für eine zweite Versorgungsspannung V2 für die Treiberschaltung in Höhe von zum Beispiel 15 V. In diesem Ausführungsbeispiel wird diese zweite Versorgungsspannung V2 aus der Hilfsspannung V1 mittels einer dritten Spannungsregelschaltung in Form einer Hochsetzstellers HS generiert.

Wie in Fig. 1 veranschaulicht, umfasst der Hochsetzsteller HS eine Induktivität L, eine Diode D und einen Transistor Q. Um eine zweite Versorgungsspannung V2 zu erzeugen, die höher als die Hilfsspannung V1 ist, wird der Transistor Q des Hochsetzstellers HS mit einem hochfrequenten Rechtecksignal angesteuert. Je größer die Frequenz dieses Rechtecksignals ist, umso kleiner kann die Induktivität des Hochsetzstellers HS dimensioniert sein.

Das Rechtecksignal für den Transistor Q des Hochsetzstellers HS (das Steuersignal der Erfindung) wird von dem Mikrocontroller CTR erzeugt. Dabei steuert die Steuerung CTR den Hochsetzsteller HS nur an, wenn die Treiberschaltung DR die Leistungshalbleiterbrücke LHB ansteuern soll und wenn ein fehlerfreier Programmablauf im CTR vorliegt. Das Bedeutet, dass die Generierung des Rechtecksignals erst möglich ist, wenn die zyklische softwareseitige Programmabarbeitung im CTR keinen Fehler aufweist und alle äußeren Bedingungen erfüllt sind. Dadurch wird gleichzeitig eine Watchdog-Funktion erfüllt. Hierdurch kann eine Fehlansteuerung der Leistungshalbleiterbrücke LHB zum Beispiel im Standby oder beim Initialisieren des Mikrocontrollers verhindert werden. Außerdem kann auf diese Weise ohne zusätzliche Schaltungen und Komponenten eine so genannte Watchdog-Funktion realisiert werden.

Die Regelung der gewünschten Spannungshöhe der zweiten Versorgungsspannung V2 für die Treiberschaltung DR kann zum Beispiel "extern" durch eine Komparatorschaltung erfolgen. Diese vergleicht die Ausgangsspannung über einen entsprechenden Spannungsteiler mit einem Referenzwert und sperrt das Steuersignal des Mikrocontrollers CTR bei Überschreiten des vorgegebenen Referenzwertes. Wird dann der Referenzwert mit einer Hysterese wieder unterschritten, so wird das Steuersignal des Mikrocontrollers CTR wieder zum Transistor Q des Hochsetzstellers HS "durchgelassen".

Alternativ kann die Regelung der Höhe der zweiten Versorgungsspannung V2 auch durch den Mikrocontroller CTR selbst übernommen werden. In diesem Fall wird zum Beispiel die erzeugte Spannung über einen entsprechenden Spannungsteiler zum Mikrocontroller CTR zurückgeführt, um über eine interne Logik des Mikrocontrollers CTR das Steuersignal freizugeben bzw. zu sperren.

Wenn von der Steuerung CTR kein Steuersignal an den Hochsetzsteller HS geliefert wird, liegt die zweite Versorgungsspannung V2 für die Treiberschaltung DR etwa auf dem Potential der Hilfsspannung V1 abzüglich der Flussspannung der Diode D des Hochsetzstellers HS. Diese reduzierte zweite Versorgungsspannung reicht aber nicht aus, um die Leistungshalbleiterbrücke LHB anzusteuern, da die Treiberschaltung DR typischerweise über eine Unterspannungsabschaltung verfügt.

Fig. 2 zeigt ein zweites Ausführungsbeispiel eines Schaltungsaufbaus zum Bereitstellen einer Versorgungsspannung für die Treiberschaltung DR von Fig. 3. Dabei sind gleiche bzw. analoge Komponenten mit den gleichen Bezugszeichen wie in Fig. 1 versehen.

In diesem Ausführungsbeispiel ist die dritte Spannungsregelschaltung durch eine Ladungspumpe LP realisiert. Diese Ladungspumpe LP weist drei in Reihe geschaltete Dioden, drei Kondensatoren C1, C2 und C3, ein Verstärkergatter und ein Invertiergatter auf. Das Steuersignal von dem Mikrocontroller CTR schaltet die Kondensatoren C1 und C2 mittels der Verstärker- und Invertiergatter alternierend und invertiert auf die Hilfsspannung V1 oder auf Masse. Hierdurch ergibt sich ein Ladungstransport zum dritten Kondensator C3 der Ladungspumpe LP, bei einer dreifach höheren Spannung V2 als die Hilfsspannung V1.

Auch bei dieser Ausführungsform kann die Höhe der zweiten Versorgungsspannung V2 für die Treiberschaltung DR analog zum ersten Ausführungsbeispiel wahlweise durch den Mikrocontroller CTR selbst oder durch eine "externe" Schaltung geregelt werden.

Die übrigen Komponenten und deren Funktionsweisen entsprechen jenen des obigen ersten Ausführungsbeispiels.

Während in den beiden obigen Ausführungsbeispielen der Fig. 1 und 2 die zweite Versorgungsspannung V2 für die Treiberschaltung DR jeweils größer als die vom Tiefsetzsteller TS aus der Zwischenkreisspannung V+ erzeugte Hilfsspannung V1 gewählt ist und dementsprechend durch einen Hochsetzsteller HS oder eine Ladungspumpe LP als dritte Spannungsregelschaltung zum Beispiel von 5,5 V auf 15 V heraufgesetzt wird, besteht grundsätzlich auch die Möglichkeit, die zweite Versorgungsspannung V2 für die Treiberschaltung DR kleiner als die vom Tiefsetzsteller TS aus der Zwischenkreisspannung V+ erzeugte Hilfsspannung V1 zu wählen und dementsprechend durch einen Tiefsetzsteller als dritte Spannungsregelschaltung herabzusetzen.

## Patentansprüche

1. Schaltungsanordnung zum Bereitstellen einer Spannungsversorgung für eine von einer Steuerung angesteuerte Treiberschaltung, mit einer Steuerung (CTR) zum Ansteuern einer Treiberschaltung (DR);
**dadurch gekennzeichnet, dass**
die Schaltungsanordnung zusätzlich umfasst:
eine erste Spannungsregelschaltung (TS) zum Erzeugen einer Hilfsspannung (V1) aus einer zur Verfügung stehenden Gleichspannung (V+); eine zweite Spannungsregelschaltung (LR) zum Erzeugen einer ersten Versorgungsspannung (V3) für die Steuerung (CTR) aus der Hilfsspannung (V1); und eine dritte Spannungsregelschaltung (HS, LP) zum Erzeugen einer zweiten Versorgungsspannung (V2) für die Treiberschaltung (DR) aus der Hilfsspannung (V1) oder der ersten Versorgungsspannung (V3) für die Steuerung (CTR), wobei die dritte Spannungsregelschaltung (HS, LP) die zweite Versorgungsspannung (V2) in Abhängigkeit von einem Steuersignal von der Steuerung (CTR) erzeugt.

2. Schaltungsanordnung nach Anspruch 1,
**dadurch gekennzeichnet, dass**
die zweite Spannungsregelschaltung einen Längsregler (LR) aufweist.

3. Schaltungsanordnung nach Anspruch 1 oder 2,
**dadurch gekennzeichnet, dass**
die zweite Versorgungsspannung (V2) größer oder gleich der Hilfsspannung (V1) gewählt ist; und
die dritte Spannungsregelschaltung einen Hochsetzsteller (HS) und/oder eine Ladungspumpe (LP) aufweist.

4. Schaltungsanordnung nach Anspruch 1 oder 2,
**dadurch gekennzeichnet, dass**
die zweite Versorgungsspannung (V2) kleiner oder gleich der Hilfsspannung (V1) gewählt ist; und
die dritte Spannungsregelschaltung einen Tiefsetzsteller (HS) aufweist.

5. Schaltungsanordnung nach einem der vorherigen Ansprüche,
**dadurch gekennzeichnet, dass**
die Steuerung (CTR) derart ausgestaltet ist, dass sie das Steuersignal für die dritte Spannungsregelschaltung (HS, LP) in Abhängigkeit von einer fehlerfreien Funktionalität der Treiberschaltung (DR) und/oder einer von der Treiberschaltung (DR) angesteuerten Schaltung (LHB) erzeugt.

6. Schaltungsanordnung nach einem der vorherigen Ansprüche,
**dadurch gekennzeichnet, dass**
die Höhe der zweiten Versorgungsspannung (V2) für die Treiberschaltung (DR) durch die Steuerung (CTR) oder eine zusätzliche Schaltung steuerbar ist.

7. Schaltungsanordnung nach einem der vorherigen Ansprüche,
**dadurch gekennzeichnet, dass**
sie weiter eine an eine Spannungsquelle (LN) anschließbare Zwischenkreisschaltung (ZK) zum Bereitstellen der Gleichspannung (V+) aufweist.

8. Schaltungsanordnung nach Anspruch 7,
**dadurch gekennzeichnet, dass**
die Zwischenkreisschaltung (ZK) eine Gleichrichterschaltung enthält.

9. Verfahren zum Bereitstellen einer Spannungsversorgung für eine von einer Steuerung angesteuerte Treiberschaltung, mit
Erzeugen einer Hilfsspannung (V1) aus einer zur Verfügung stehenden Gleichspannung (V+);
Erzeugen einer ersten Versorgungsspannung (V3) für die Steuerung (CTR) aus der Hilfsspannung (V1); und
Erzeugen einer zweiten Versorgungsspannung (V2) für die Treiberschaltung (DR) aus der Hilfsspannung (V1) oder der ersten Versorgungsspannung (V3) in Abhängigkeit von einem Steuersignal von der Steuerung (CTR).

10. Verfahren nach Anspruch 9,
**dadurch gekennzeichnet, dass**
zum Bereitstellen der Spannungsversorgung für die Treiberschaltung (DR) eine Schaltungsanordnung nach einem der Ansprüche 1 bis 8 verwendet wird.

## Claims

1. Circuit arrangement for providing a voltage supply for a driver circuit driven by a controller, comprising
a controller (CTR) for driving a driver circuit (DR) ;
**characterized in that**
the circuit arrangement additionally comprises:
a first voltage regulating circuit (TS) for generating an auxiliary voltage (V1) from an available DC voltage (V+);
a second voltage regulating circuit (LR) for generating a first supply voltage (V3) for the controller (CTR) from the auxiliary voltage (V1); and
a third voltage regulating circuit (HS, LP) for generating a second supply voltage (V2) for the driver circuit (DR) from the auxiliary voltage (V1) or the first supply voltage (V3) for the controller (CTR), wherein the third voltage regulating circuit (HS, LP) generates the second supply voltage (V2) in a manner dependent on a control signal from the controller (CTR).

2. Circuit arrangement according to Claim 1,
**characterized in that**
the second voltage regulating circuit has a series regulator (LR).

3. Circuit arrangement according to Claim 1 or 2,
**characterized in that**
the second supply voltage (V2) is chosen to be greater than or equal to the auxiliary voltage (V1); and
the third voltage regulating circuit has a boost controller (HS) and/or a charge pump (LP).

4. Circuit arrangement according to Claim 1 or 2,
**characterized in that**
the second supply voltage (V2) is chosen to be less than or equal to the auxiliary voltage (V1); and
the third voltage regulating circuit has a buck controller (HS).

5. Circuit arrangement according to any of the preceding claims,
**characterized in that**
the controller (CTR) is configured in such a way that it generates the control signal for the third voltage regulating circuit (HS, LP) in a manner dependent on a fault-free functionality of the driver circuit (DR) and/or a circuit (LHB) driven by the driver circuit (DR).

6. Circuit arrangement according to any of the preceding claims,
**characterized in that**
the magnitude of the second supply voltage (V2) for the driver circuit (DR) is controllable by the controller (CTR) or an additional circuit.

7. Circuit arrangement according to any of the preceding claims,
**characterized in that**
it furthermore has an intermediate circuit (ZK) for providing the DC voltage (V+), said intermediate circuit being connectable to a voltage source (LN).

8. Circuit arrangement according to Claim 7,
**characterized in that**
the intermediate circuit (ZK) contains a rectifier circuit.

9. Method for providing a voltage supply for a driver circuit driven by a controller, comprising
generating an auxiliary voltage (V1) from an available DC voltage (V+);
generating a first supply voltage (V3) for the controller (CTR) from the auxiliary voltage (V1); and
generating a second supply voltage (V2) for the driver circuit (DR) from the auxiliary voltage (V1) or the first supply voltage (V3) in a manner dependent on a control signal from the controller (CTR).

10. Method according to Claim 9,
**characterized in that**
a circuit arrangement according to any of Claims 1 to 8 is used for providing the voltage supply for the driver circuit (DR).

## Revendications

1. Système de circuit destiné à fournir une alimentation en tension destinée à un circuit d'attaque commandé par une unité de commande, comportant une unité de commande (CTR) destinée à commander un circuit d'attaque (DR) ;
**caractérisé en ce que** le système de circuit comprend en outre :
un premier circuit de régulation de tension (TS) destiné à générer une tension auxiliaire (V1) à partir d'une tension continue disponible (V+) ;
un deuxième circuit de régulation de tension (LR) destiné à générer une première tension d'alimentation (V3) destinée à l'unité de commande (CTR) à partir de la tension auxiliaire (V1) ; et
un troisième circuit de régulation de tension (HS, LP) destiné à générer une deuxième tension d'alimentation (V2) destinée au circuit d'attaque (DR) à partir de la tension auxiliaire (V1) ou de la première tension d'alimentation (V3) destinée à l'unité de commande (CTR), dans lequel le troisième circuit de régulation de tension (HS, LP) génère la deuxième tension d'alimentation (V2) en fonction d'un signal de commande de l'unité de commande (CTR).

2. Système de circuit selon la revendication 1,
**caractérisé en ce que** le deuxième circuit de régulation de tension comporte un régulateur longitudinal (LR).

3. Système de circuit selon la revendication 1 ou 2,
**caractérisé en ce que** la deuxième tension d'alimentation (V2) est sélectionnée de manière à ce qu'elle soit supérieure ou égale à la tension auxiliaire (V1) ; et le troisième circuit de régulation de tension comporte un convertisseur élévateur (HS) et/ou une pompe de charge (LP) .

4. Système de circuit selon la revendication 1 ou 2,
**caractérisé en ce que** la deuxième tension d'alimentation (V2) est sélectionnée de manière à ce qu'elle soit inférieure ou égale à la tension auxiliaire (V1) ; et le troisième circuit de régulation de tension comporte un convertisseur abaisseur (HS).

5. Système de circuit selon l'une quelconque des revendications précédentes, **caractérisé en ce que** l'unité de commande (CTR} est conçue de manière à ce qu'elle génère le signal de commande destiné au troisième circuit de régulation de tension (HS, LP) en fonction d'une fonctionnalité sans erreur du circuit d'attaque (DR) et/ou d'un circuit (LHB) commandé par le circuit d'attaque (DR).

6. Système de circuit selon l'une quelconque des revendications précédentes, **caractérisé en ce que** la hauteur de la deuxième tension d'alimentation (V2) destinée au circuit d'attaque (DR) peut être commandée par l'unité de commande (CTR) ou par un circuit supplémentaire.

7. Système de circuit selon l'une quelconque des revendications précédentes, **caractérisé en ce qu'**il comporte en outre un circuit intermédiaire (ZK) pouvant être raccordé à une source de tension (LN) pour fournir la tension continue (V+).

8. Système de circuit selon la revendication 7,
**caractérisé en ce que** le circuit intermédiaire (ZK) comporte un circuit redresseur.

9. Procédé destiné à fournir une alimentation en tension destinée à un circuit d'attaque commandé par une unité de commande, consistant à
générer une tension auxiliaire (V1) à partir d'une tension continue disponible (V+) ;
générer une première tension d'alimentation (V3) destinée à l'unité de commande (CTR) à partir de la tension auxiliaire (V1) ; et
générer une deuxième tension d'alimentation (V2) destinée au circuit d'attaque (DR) à partir de la tension auxiliaire (V1) ou de la première tension d'alimentation (V3) en fonction d'un signal de commande de l'unité de commande (CTR).

10. Procédé selon la revendication 9,
**caractérisé en ce qu'**un système de circuit selon l'une quelconque des revendications 1 à 8 est utilisé pour fournir l'alimentation en tension destinée au circuit d'attaque (DR).
